# EUROPÄISCHE PATENTSCHRIFT

(11) **EP 2 650 577 B1**
(45) Veröffentlichungstag und Bekanntmachung des Hinweises auf die Patenterteilung: **26.12.2018**
(21) Anmeldenummer: 13001501.9
(22) Anmeldetag: 23.03.2013
(51) Int. Cl.: F16L 5/06, H02G 3/06, F16B 37/08, H02G 3/08, H02G 3/22, H02G 15/013

(54) **Vorrichtung zur Verlegung von Langformteilen durch Gerätewandungen**
Apparatus for laying of long moulded parts through device walls
Dispositif permettant de poser des pièces longilignes à travers des parois d'appareil

(30) Priorität: 13.04.2012 DE 102012007460
(43) Veröffentlichungstag der Anmeldung: 16.10.2013
(73) Patentinhaber: Pflitsch GmbH & Co. KG., 42499 Hückeswagen (DE)
(72) Erfinder: Lechner, Martin, 51789 Lindlar (DE); Schwinning, Ulrike, 42499 Hückeswagen (DE)
(74) Vertreter: Geskes, Christoph

(56) Entgegenhaltungen:
- EP-A1- 0 655 817
- EP-A2- 0 793 322
- DE-C1- 4 322 032

## Beschreibung

Die Erfindung betrifft eine Vorrichtung zur Verlegung von Rohren, Leitungen und dergleichen Langformteilen durch Gerätewandungen und dergleichen Bauteile, bestehend aus mindestens einem Durchführungsnippel mit Außengewinde, und mindestens einer Druckschraube mit Innengewinde, die auf den Durchführungsnippel aufschraubbar ist und die aus zwei Halbschalen mit in Längsrichtung des Langformteiles verlaufenden Trennstellen besteht, die an den jeweils gegenüberliegenden Trennstellen der Halbschalen der Druckschraube ineinander greifende Führungs- und Positioniermittel aufweist, mittels derer die Halbschalen in der Zusammenbaulage zueinander gehalten sind, wobei an der Druckschraube ein nach radial innen gerichteter Kragen als Druckfläche für einen Dichteinsatz ausgebildet ist.

Vorzugsweise ist zusätzlich ein Dichteinsatz vorgesehen, der sich an dem Durchführungsnippelarial abstützt und durch die Druckschraube gespannt werden kann.

Derartige Vorrichtungen, die auch Kabelverschraubungen genannt werden, sind im Gerätebau üblich und dienen dazu, beispielsweise Rohre, Leitungen, Kabel oder dergleichen Langformteile durch Gerätewandungen elastisch abgedichtet hindurchzuführen.

Eine gattungsgemäße Vorrichtung ist aus der DE 43 22 032 C1 bekannt und hat sich an sich bewährt. Mittels derartiger längsgeteilter Vorrichtungen können sowohl bereits durch beispielsweise Gerätewandungen verlaufende Langformteile nachträglich abgedichtet werden als auch bereits bestehende Vorrichtungen, die beschädigt wurden oder nicht mehr ausreichende Dichtigkeit aufweisen, ersetzt werden.

Bei der bekannten Lösung ist es nachteilig, dass die Druckschraube aus zwei unterschiedlichen Teilen besteht, sodass bei den Druckschrauben jeweils zwei verschiedene, sich ergänzende Halbschalen mitgeführt werden müssen, um jeweils die verschiedenen Halbschalen zu einer Druckschraube zusammen setzen zu können. Zudem müssen entsprechende Werkzeuge zur Herstellung der beiden unterschiedlichen Halbschalen hergestellt und benutzt werden. Eine Vorrichtung gemäß dem Oberbegriff des Anspruchs 1 ist aus der EP 0655817A1 bekannt, diese Schrift offenbart eine Vorrichtung mit einer Druckschraube, die aus zwei identischen Teilen besteht.

Bei einer derartigen, aus zwei identischen Halbschalen bestehenden Druckschraube muss vom Benutzer nicht mehr darauf geachtet werden, jeweils zu einer ersten Halbschale eine verschiedene, zweite Halbschale mitzuführen. Auch ist der Herstellungsaufwand minimiert.

Aufgrund des eingangs genannten Standes der Technik liegt der vorliegenden Erfindung die Aufgabe zugrunde, eine Vorrichtung der eingangs genannten Art zu schaffen, bei der die Anzahl an unterschiedlichen Teilen reduziert ist, die dabei besonders schnell und einfach zusammenbaubar ist, und die kostengünstig und einfach herstellbar ist und eine hohe Lebensdauer aufweist, und die gegebenenfalls die abgedichtete Durchführung mehrerer Langformteile ermöglicht.

Zur Lösung dieser Aufgabe schlägt die Erfindung vor, dass ferner am die Druckfläche bildenden Kragen Verriegelungskonturen ausgebildet sind, nämlich an der ersten Trennstelle der Halbschale ein Riegeleingriff und an der zweiten Trennstelle ein Riegelvorsprung, wobei Riegeleingriff und Riegelvorsprung derart ausgerichtet und angeordnet sind, dass die Halbschalen quer zur Schnittebene der Halbschalen und quer zur Mittellängsachse zueinander verdreht aneinander anlegbar sind, und durch das Eingreifen der Riegelvorsprünge in die Riegeleingriffe verriegelt sind, wenn die Halbschalen aus der verdrehten Lage in die Lage gebracht sind, in der ihre Mittellängsachsen koaxial gerichtet verlaufen.

Es ist möglich, diese Halbschalen innerhalb kürzester Zeit von außen auf ein entsprechendes Langformteil aufzusetzen und in die Verriegelungslage zu verschwenken. Somit ist insbesondere der Zeitaufwand beim Wechseln oder beschädigungsbedingtem Erneuern einer erfindungsgemäßen Vorrichtung gegenüber bestehenden Lösungen deutlich verringert, wodurch Montagekosten erspart werden können.

Derartige Halbschalen werden vom Benutzer in einer quer zur Mittel-Längsebene der Halbschalen und quer zur Schnittachse der Halbschalen geringfügig verdrehten Lage aneinander vorpositioniert, aneinander angedrückt, und anschließend zueinander verdreht, so dass die Mittel-Längsachsen der beiden Halbschalen koaxial verlaufen. In dieser Lage verhindern die nun in die Riegelvorsprünge eingreifenden Riegeleingriffe eine lineare Verschiebung der beiden Halbschalen zueinander. Die Verriegelung erfolgt etwa analog einem Drehriegelverschluss. Bei einer derartigen Druckschraube sind sowohl die Führungs- und Positioniermittel als auch Verriegelungsmittel jeweils an den Halbschalen angeformt, so dass keinerlei zusätzliche Teile zum Verbinden der Halbschalen verwendet werden müssen.

Vorzugsweise ist zudem vorgesehen, dass das Innengewinde der durch die beiden Halbschalen gebildeten Druckschraube sowie das Außengewinde am Durchflussnippel zweigängig ist.

Bei den identischen Halbschalen ist das an der aus diesen zusammengesetzten Druckschraube ausgebildete Innengewinde zweigängig ausgebildet, und kann auf einfache und schnelle Art und Weise auf ein entsprechendes Außengewinde, welches beispielsweise an einem Durchführungsnippel ausgebildet ist, aufgeschraubt werden. Damit ist trotz identischer Ausbildung der Halbschalen ein zum Aufschrauben passendes Gewinde ausgebildet.

Insbesondere kann dabei besonders bevorzugt vorgesehen sein, dass die an der Halbschale der Druckschraube nach innen ragende Axialleiste eine Ausnehmung aufweist, die beim Zusammensetzen der Halbschalen eine Einführhilfe für das stirnseitige Ende der Axialnut des anderen Teils bildet.

Durch die eine Einführhilfe bildende Ausnehmung ist das Vorpositionieren vor dem Verdrehen in die Lage, in der die Mittel-Längsachsen der beiden Halbschalen koaxial verlaufen, deutlich vereinfacht. Durch die Ausnehmung kann beim Zusammensetzen der Halbschalen das stirnseitige Ende der Axialnut auf schnelle und einfache Art und Weise die Axialleiste hintergreifen beziehungsweise umgreifen. Der erforderliche Verdrehwinkel ist gegenüber einer Ausführung ohne Ausnehmung deutlich reduziert. Somit ist durch die Ausnehmung an der nach innen ragenden Axialleiste das Zusammensetzen der beiden Halbschalen zu einer Druckschraube erheblich erleichtert.

Eine erfindungsgemäße Vorrichtung ist kostengünstig und einfach herstellbar und weist eine hohe Lebensdauer auf.

Zur abgedichteten Durchführung mehrerer Langformteile durch Gerätewandungen oder dergleichen Bauteile, wobei mindestens ein Durchführungsnippel, vorzugsweise mehrere Durchführungsnippel an einem plattenartigen geteilten Flansch ausgebildet sind, schlägt die Erfindung vor, dass der Flansch aus zwei den oder die Durchführungsnippel mittig kreuzenden Hälften besteht, die mittels angeformter Verbindungsmittel miteinander verbindbar sind, dass die Hälften identische Form und Ausgestaltung haben und in zusammengesetzter Lage ein zweigängiges Außengewinde im Bereich jedes Durchführungsnippels aufweisen.

Ein derartiger plattenartiger Flansch, der aus zwei identischen Teilen besteht und auf schnelle und einfache Art und Weise zusammensetzbar ist, ermöglicht die Durchführung von mehreren Langformteilen, beispielsweise durch einen entsprechenden Ausschnitt einer Gerätewandung. Ein derartiger Flansch kann auch auf oder in entsprechende Lochungen an einer Gerätewandung aufgesetzt oder eingesetzt und gegenüber der Gerätewandung abgedichtet werden. Dazu muss ein derartiger Flansch lediglich die entsprechenden Langformteile mit seinen Durchführungsnippeln umgreifen und kann anschließend in zusammengesetzter Lage beispielsweise an einer Gerätewandung befestigt und gegenüber dieser abgedichtet werden. Durch die Gleichteile-Ausbildung ist der Fertigungsaufwand minimiert.

Zur schnellen und einfachen Verbindung der beiden Flanschhälften kann besonders bevorzugt vorgesehen sein, dass an den Flanschhälften in der Zusammenbaulage ineinandergreifende Vorsprünge und Ausnehmungen ausgebildet sind, die eine Positionierung und Fixierung der Bauteile zueinander gegeneinander sicherstellen.

Bei einem derartig ausgebildeten Flansch können die Flanschhälften durch schnelles und einfaches Einschieben oder Aufschieben der Vorsprünge und Ausnehmungen der ersten Flanschhälfte in oder auf die Ausnehmungen und Vorsprünge der zweiten Flanschhälfte zusammengesetzt werden. Anschließend kann auf jeden so gebildeten Durchführungsnippel, der ein zweigängiges Außengewinde aufweist, eine Druckschraube aufgeschraubt werden, vorzugsweise eine erfindungsgemäße Druckschraube.

Somit können durch einen derartigen erfindungsgemäßen Flansch auch mehrere Langformteile durch einen, beispielsweise an einer Gerätewandung anzubringenden, Flansch abgedichtet durch die Wandung geführt werden.

Zur Verbesserung der Abdichtfunktion kann vorgesehen sein, dass an jeder Flanschhälfte eine elastische Dichtung angeordnet ist, die einerseits die Abdichtung vom Flansch gegenüber einer Gerätewandung und andererseits zwischen den Flanschhälften bildet.

Des Weiteren ist bevorzugt vorgesehen, dass die elastische Dichtung zusätzlich im Bereich der Vorsprünge und Ausnehmungen an den Flanschhälften vorgesehen ist, sodass schon im Vormontagezustand eine Vorfixierung der Teile gegeneinander sichergestellt ist.

Eine weitere vorteilhafte Ausgestaltung wird darin gesehen, dass jede Flanschhälfte oder mindestens eine der beiden den Flansch bildenden Flanschhälften mehrere Dichtungselemente aufweist, die als L-förmige Dichtungsabschnitte ausgebildet sind, wobei jeweils ein Schenkel der L-Form an der Längsrandkante der Trennfuge der Flanschhälfte und ein Schenkel der L-Form an der Trennfuge des geteilten Durchführungsnippels anliegt.

Bei dieser Ausgestaltung können die Dichtungselemente jeweils als gleiche L-förmige Dichtungsabschnitte ausgebildet sein und auf eine Flanschhälfte aufgelegt oder mit dieser verbunden werden oder auch auf beide Flanschhälften aufgelegt und mit diesen jeweils verbunden werden, sodass dann im Zusammenbau die Dichtfuge zwischen den Flanschhälften und den geteilten Durchführungsnippeln hervorragend abgedichtet ist. Der Aufwand bezüglich der L-förmigen Dichtungsabschnitte ist gering, weil diese gleiche Form und Abmessung aufweisen sollen.

Zudem ist bevorzugt vorgesehen, dass die Vorsprünge als Hakenelemente und die Ausnehmungen als quer von der Flanschhälfte nach unten, entgegen den Durchführungsnippeln fensterartige Ausschnitte ausgebildet sind, wobei die Hakenlemente, bei einen Winkel miteinander einschließender Zuordnung der Flanschhälften in die Ausschnitte einhakbar sind und durch Drehung der Flanschhälften die die Verhakungsbereiche in eine zueinander parallele Ausrichtung unlösbar verhakt sind.

Durch diese Ausgestaltung ist es möglich, die beiden Flanschhälften in der Weise miteinander zu verbinden, dass die beiden Flanschhälften im Winkel zueinander gehalten werden und jeweils die Hakenelemente der einen Flanschhälfte in die Ausschnitte der anderen Flanschhälfte eingehakt werden. Nachfolgend kann dann eine Verschwenkung der beiden Flanschhälften zueinander erfolgen, sodass die Flanschoberseite und -unterseite bezüglich der beiden Flanschhälften bündig zueinander ausgerichtet sind. Sofern dann das so gebildete Flanschteil auf eine Anschlussfläche, beispielsweise eines Gehäuses, aufgelegt wird, so sind die beiden Flanschhälften nicht mehr relativ zueinander beweglich. Sie können also nicht voneinander getrennt werden, ohne von der Auflage der Ebene des Gehäuses gelöst und abgehoben zu werden. Es wird hierdurch die Montage vereinfacht und die Montagesolllage gesichert.

Eine weitere bevorzugte Ausgestaltung wird darin gesehen, dass die Axialleiste an ihrem dem Kragen zugewandten Endbereich von einer Deckwand überdeckt ist, die in Umfangsrichtung an den Kragen anschließt.

Gemäß dieser Ausgestaltung bildet die Deckwand einen räumlichen Abschluss oberhalb der Axialleiste, also in dem Bereich, in welchem der Kragen ausgebildet ist. Hierdurch wird einerseits einer möglichen Verformung in der Montagesolllage entgegengewirkt, sodass die beiden Bauteile sicher miteinander verbunden sind. Andererseits wird auch eine ansprechendere Optik erreicht, da die Axialleiste und die daneben befindliche Lenksausnehmung überdeckt ist und somit die konstruktive Gestaltung in diesem Bereich unsichtbar ist.

Um eine sichere Ausrichtung und Verbindung der Flanschhälften in der Montagesolllage zu erreichen ist zudem vorgesehen, dass an jeder Hälfte eines Flansches mindestens eine von der einen Hälfte des Flansches zu der anderen Hälfte des Flansches vorragende Lasche ausgebildet ist und eine zu dieser formgleiche Laschenaufnahme ausgebildet ist, wobei in Montagesolllage jeweils die Lasche der einen Hälfte in die Laschenaufnahme der anderen Hälfte eingelegt ist.

In der Montagesolllage liegt jeweils die vorragenede Lasche der einen Hälfte in der Laschenaufnahme der anderen Hälfte, sodass eine sichere Positionierung und Ausrichtung erreicht ist.

Besonders bevorzugt ist dabei vorgesehen, dass die Laschen und die Laschenaufnahmen jeweils Lochungen aufweisen, die in Montagesolllage der Hälften koaxial zueinander ausgerichtet sind und zum Durchstecken eines Befestigungsmittels dienen.

Hierdurch ist es möglich, die Flanschhälften in der Montagesolllage an der Befestigungsebene, beispielsweise einem Gehäuse oder dergleichen mittels Schrauben zu fixieren, wobei durch die Anordnung der Befestigungsmittel insbesondere in Form von Schrauben, eine feste Verspannung der Hälften gegeneinander erreicht wird. Insbesondere dann, wenn zwischen den Hälften eine Weichdichtung oder ein Dichtungsschaum eingebracht ist, ist diese Anordnung bevorzugt, um das Verpressen des Dichtmaterials sicher zu gewährleisten. Bei der Montage wird durch das Anziehen der Schraubverbindungen gegen das Gehäuse oder dergleichen, an welchem der Flansch befestigt ist, eine ausreichend hohe Verpresskraft aufgebracht. Diese Kraft wird über die einstückig angeformten hebelartigen Laschen aufgebracht. Die jeweils an der einen Hälfte angeordnete Lasche taucht in die jeweils komplementäre Laschenaufnahme in Form einer nach oben offenen Tasche ein. Durch Einsetzen und Festschrauben der Befestigungsschrauben des Flansches kann dabei ohne zusätzliche Einzelteile und ohne zusätzliche Arbeitsschritte eine sichere Verpressung der Dichtung erreicht werden.

Bevorzugt ist zudem vorgesehen, dass die Hälften jeweils in den Laschen entgegengesetzten Bereichen weitere Lochungen für Befestigungsmittel aufweisen.

Diese Ausgestaltung dient zur weiteren Festlegung des Flansches an dem entsprechenden Gehäuseteil oder dergleichen.

Ausführungsbeispiele der Erfindung sind in den Figuren gezeigt und im Folgenden näher beschrieben.

Es zeigt:
- Figur 1: eine erfindungsgemäße Druckschraube in zusammengesetzter Montagesolllage von schräg oben gesehen;
- Figur 2: desgleichen in Draufsicht;
- Figur 3: eine erfindungsgemäße Druckschraube in Vormontagelage in Seitenansicht;
- Figur 4: desgleichen von schräg oben gesehen;
- Figur 5: desgleichen analog Figur 2 mit Abstand zwischen den beiden Halbschalen;
- Figur 6: eine erfindungsgemäße Halbschale von schräg oben gesehen mit Blick auf die Halbschale;
- Figur 7: eine erfindungsgemäße Halbschale mit Blick von außen auf die Halbschale und von schräg oben gesehen;
- Figur 8: eine erfindungsgemäße Halbschale in Seitenansicht mit Blick auf die Innenseite;
- Figur 9: einen erfindungsgemäßen Flansch mit Durchführungsnippeln in Zusammenbaulage von schräg oben gesehen;
- Figur 10: desgleichen von schräg unten gesehen;
- Figur 11: eine erfindungsgemäße Flanschhälfte in Seitenansicht;
- Figur 12: eine erfindungsgemäße Flanschhälfte von schräg oben gesehen;
- Figur 13: desgleichen von schräg unten gesehen;
- Figur 14: den Flansch in Seitenansicht;
- Figur 15: eine alternative Ausführungsform des Flansches vor der Montage der beiden Flanschhälften;
- Figur 16: eine Variante einer erfindungsgemäßen Halbschale der Druckschraube, Analogfigur 6 gesehen;
- Figur 17: eine erfindungsgemäße Flanschhälfte in Schrägansicht;
- Figur 18: ein aus zwei solchen Flanschhälften zusammengesetzter Flansch in einer Vormontagelage;
- Figur 19: den Flansch in einer Endmontagelage im Schnitt gesehen.

In den Figuren ist eine Vorrichtung zur Verlegung von Rohren, Leitungen und dergleichen Langformteilen durch Gerätewandungen und dergleichen Bauteile gezeigt. Die Vorrichtung besteht aus einem Durchführungsnippel 10 mit Außengewinde 13, gegebenenfalls einem in den Durchführungsnippel 10 eingesteckten Dichteinsatz und einer Druckschraube 1 mit Innengewinde 2, die auf den Dichteinsatz einwirkt. Die Druckschraube 1 besteht aus zwei identischen Halbschalen 3 mit in Längsrichtung des Langformteiles verlaufender Teilungsebene und ebenso verlaufenden Trennstellen. Sie weist an den Trennstellen der Halbschalen 3 in Montagesolllage ineinandergreifende Führungs- und Positioniermittel auf. Mittels der Führungs- und Positioniermittel sind die Halbschalen 3 in der Zusammenbaulage zueinander gehalten. Dabei ist an der Druckschraube 1 ein nach innen gerichteter Kragen 4 als Druckfläche ausgebildet. Mittels des Kragens 4 spannt die Druckschraube 1 beispielsweise einen Dichteinsatz gegen den Durchführungsnippel und somit auch gegenüber einem durchgeführten Langformteil, zum Beispiel einem Kabel, so dass dieses abgedichtet hindurchgeführt ist.

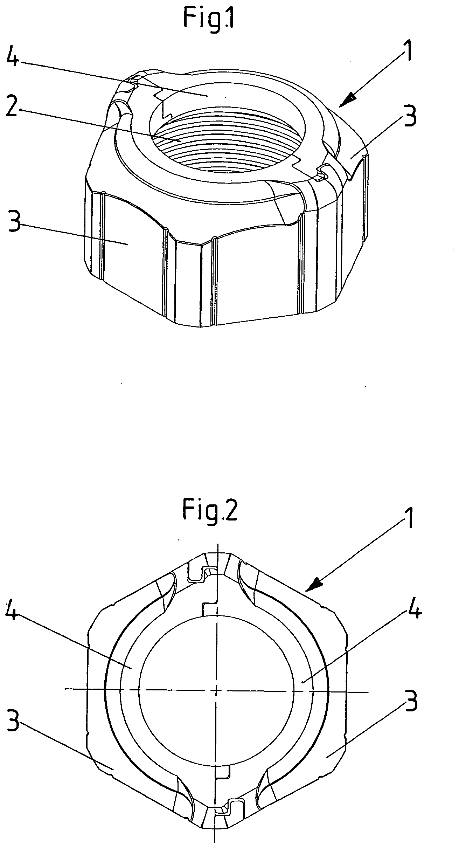

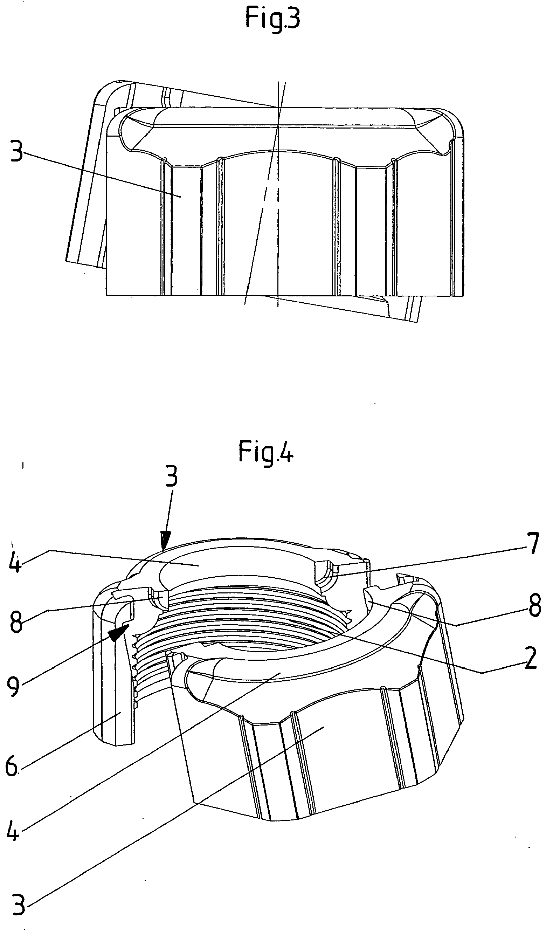

Erfindungsgemäß weisen die beiden Halbschalen 3 der Druckschraube 1 identische Form auf. Dabei weist jede Halbschale 3 am Außenmantel an einer ersten Trennstelle der beiden Trennstellen eine nach radial außen offene Axialnut 5 und am Innenmantel an einer zweiten Trennstelle der beiden Trennstellen eine nach radial innen ragende Axialleiste 6 auf. Das Innengewinde 2 der durch die beiden Halbschalen 3 gebildeten Druckschraube 1 ist zweigängig ausgebildet. Ferner sind am die Druckfläche bildenden Kragen 4 im Bereich der Trennstellen Verriegelungskonturen ausgebildet. An der ersten Trennstelle der Halbschale 3 ist im Kragenbereich ein Riegeleingriff 7 und an der Stirnfläche der zweiten Trennstelle ist im Kragenbereich ein Riegelvorsprung 8 als Verriegelungskontur ausgebildet. Dabei sind Riegeleingriff 7 und Riegelvorsprung 8 derart ausgerichtet und angeordnet, dass die Halbschalen 3 quer zur Schnittebene der Halbschalen 3 und quer zur Mittel-Längsachse der Halbschalen 3 zueinander verdreht aneinander anlegbar sind. Dies ist insbesondere aus Figur 3 und Figur 4 ersichtlich. Die Halbschalen 3 sind durch das Eingreifen der Riegelvorsprünge 8 in die Riegeleingriffe 7 miteinander verriegelt, wenn die Halbschalen 3 aneinander gedrückt werden und dann aus der zueinander verdrehten Lage (Figur 3 und Figur 4) in die Lage gebracht werden, in der ihre Mittellängsachsen koaxial gerichtet verlaufen, wie insbesondere aus Figur 1 und Figur 2 ersichtlich ist.

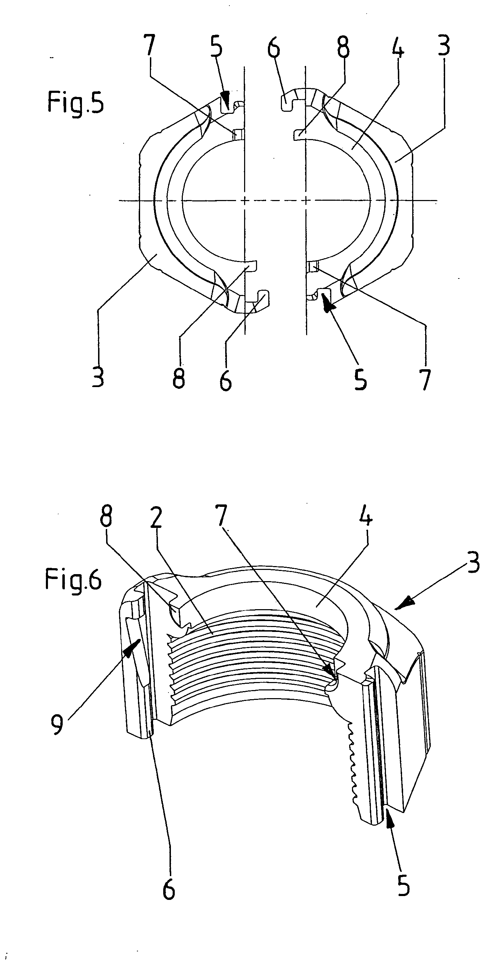

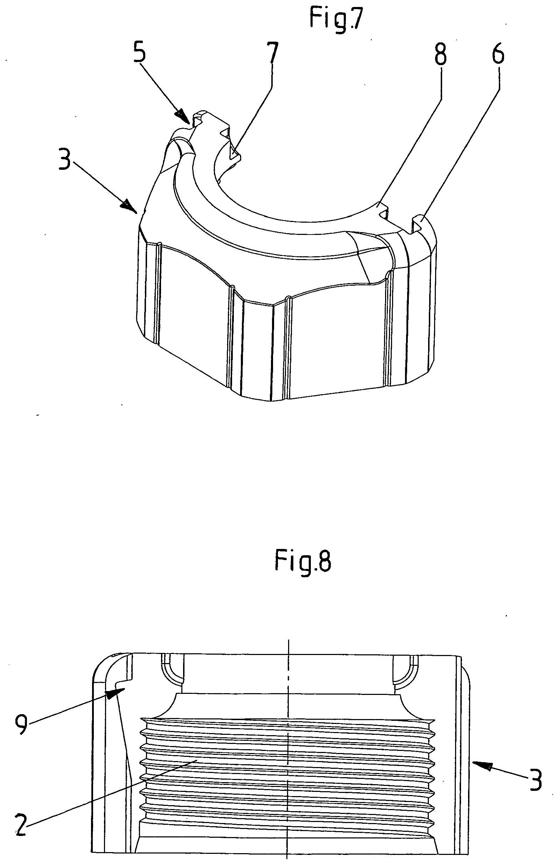

Wie insbesondere aus den Figuren 4, 6 und 8 ersichtlich, weist die nach innen ragende Axialleiste 6 eine Ausnehmung 9 auf, die nahe des Kragens 4 in einer großen Tiefe beginnt und mit Abstand vom Kragen 4 flacher wird und die beim Zusammensetzen der Halbschalen 3 eine Einführhilfe für das stirnseitige, kragennahe Ende der Axialnut 5 bildet. Somit können nach einem Vorpositionieren, wie in Figur 3 und Figur 4 gezeigt, und einem Aneinanderdrücken anschließend durch einfaches Verdrehen der beiden Halbschalen 3 in eine Lage, in der die beiden Mittel-Längsachsen der Halbschalen 3 koaxial zueinander verlaufen, die beiden Halbschalen 3 zu einer Druckschraube 1 zusammengesetzt werden.

Eine derartige Druckschraube 1 kann auf besonders schnelle und einfache Art und Weise beispielsweise beschädigte oder nicht mehr vollständig abdichtende vorhandene Druckschrauben an beispielsweise gattungsgemäßen Vorrichtungen ersetzen, nämlich indem einfach die beiden Halbschalen 3 auf das entsprechende Langformteil quer zu dessen Längsverlauf aufgesetzt werden und zueinander in eine Lage verdreht werden, in der die Mittel-Längsachsen der Halbschalen 3 koaxial verlaufen, wobei gleichzeitig die Riegelvorsprünge 8 in die Riegeleingriffe 7 eingreifen und die Halbschalen 3 linear unverschieblich gegeneinander halten beziehungsweise sperren. Anschließend kann die so gebildete Druckschraube 1 auf das, beispielsweise an einem Doppelnippel oder einem Durchführungsnippel 10 ausgebildete, Außengewinde 13 aufgeschraubt werden.

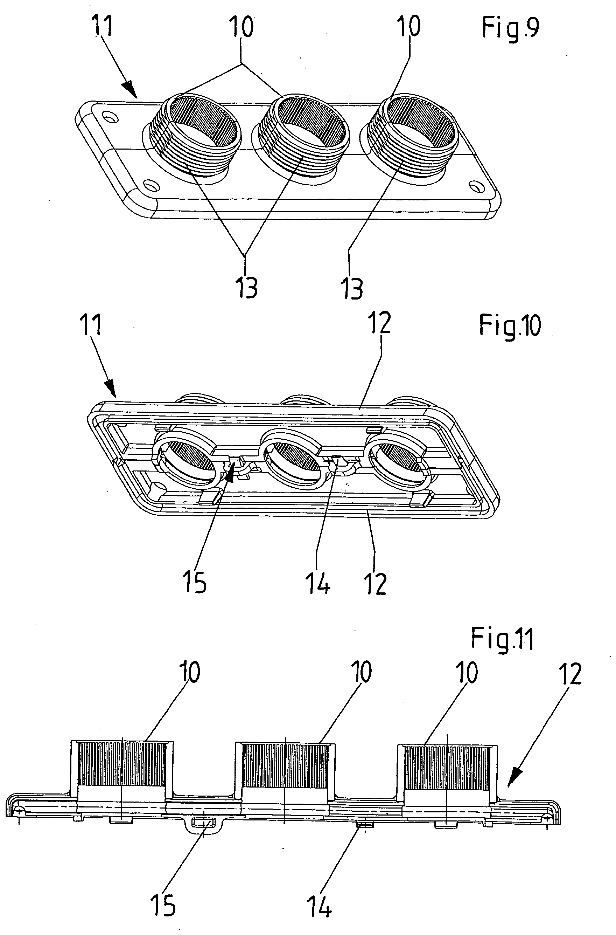

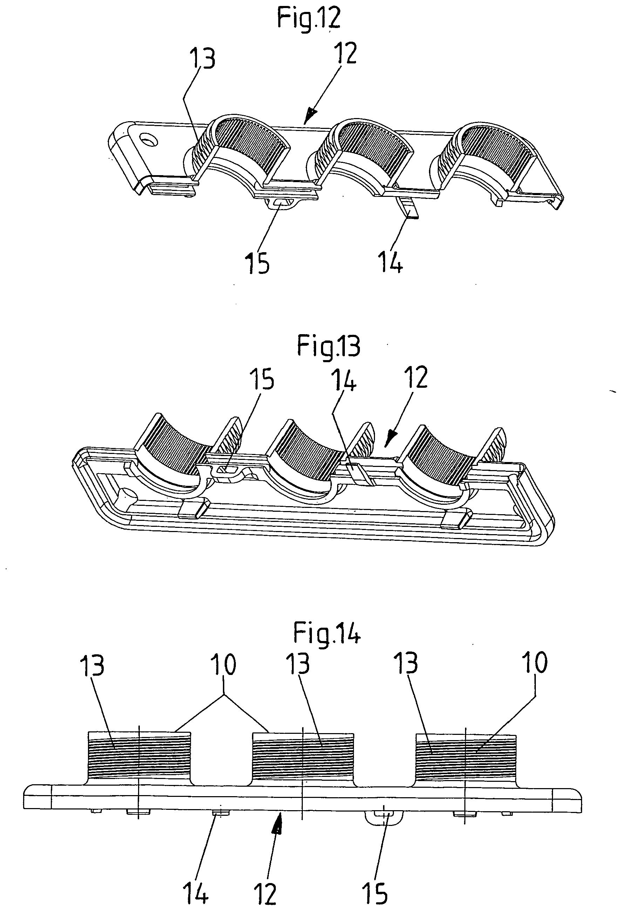

Zusätzlich stellt die Erfindung einen in den Figuren 9 bis 14 gezeigten plattenartigen Flansch 11 zur Verfügung, bei dem im Ausführungsbeispiel drei Durchführungsnippel 10 zur abgedichteten Durchführung von Langformteilen, wie beispielsweise Rohren oder Leitungen, vorgesehen sind. Ein derartiger Flansch 11 besteht aus zwei die Durchführungsnippel 10 mittig kreuzenden Hälften 12. Die Hälften 12 sind mittels entsprechender Rastmittel auf schnelle und einfache Art und Weise miteinander verbindbar. Dabei haben die Hälften 12 identische Form und Ausgestaltung und weisen in zusammengesetzter Lage ein zweigängiges Außengewinde 13 im Bereich jedes Durchführungsnippels 10 auf. Bei einem in den Figuren nicht gezeigten Ausführungsbeispiel können auch nur ein Durchführungsnippel 10 oder eine größere Anzahl an Durchführungsnippeln 10 an einem plattenartigen Flansch 11 ausgebildet sein.

Wie insbesondere aus Figur 10 ersichtlich sind an jeder Flanschhälfte 12 in der Zusammenbaulage ineinandergreifende Vorsprünge 14 und Ausnehmungen 15 ausgebildet. Beim Zusammenbau der beiden Flanschhälften 12 zu einem Flansch 11 muss lediglich der jeweilige Vorsprung 14 in die jeweilige Ausnehmung 15 eingesteckt werden und in dieser arretieren, beispielsweise durch Verrasten. Somit sind die beiden Flanschhälften 12 durch die Vorsprünge 14 und die Ausnehmungen 15 aneinander gehalten und bilden den Flansch 11.

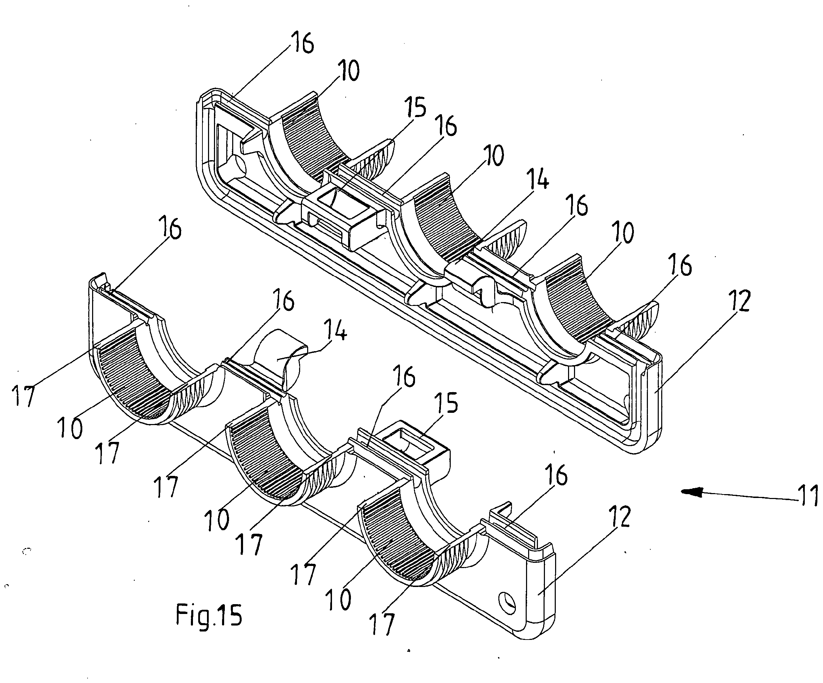

In Figur 15 ist eine Variante eines geteilten Flansches 11 mit den beiden Flanschhälften 12 in einer Lage vor der Montage gezeigt. Hierbei können in die Bereich 16 der jeweiligen Längsrandkante der Trennfuge jeder Flanschhälfte 12 und im Bereich der jeweiligen Trennfuge des geteilten Durchführungsnippels 10, also in den Bereichen 17 wiederum an beiden Flanschhälften 12 oder nur an einer Flanschhälfte L-förmige Dichtungsabschnitte aufgelegt und angeordnet werden. Diese Dichtungsabschnitte können im Wesentlichen gleich bemessen und dimensioniert sein. In der Zusammenbaulage dichten diese L-förmigen Dichtungsabschnitte die aneinander liegenden Randkanten der Flanschhälften 12 und der geteilten Durchführungsnippel 10 gegeneinander ab.

Bei dieser Ausführungsform sind zudem die Vorsprünge 14 als Hakenelemente ausgebildet, die in der Einbausollage quer von den Flanschhälften 12 nach unten abragen. Sie ragen also entgegen den Durchführungsnippeln 10 von den Flanschhälften 12 ab. Die entsprechenden Ausnehmungen 15, die ebenfalls von der Unterseite der Flanschhälften 12 abragen, dienen dazu, dass die hakenartigen Vorsprünge 14 in einer Schwenklage der beiden Flanschhälften 12 den Ausnehmungen zugeführt werden können und um den äußeren Quersteg der Ausnehmung 15 schwenken können, sodass die somit vorläufig verbundenen Flanschhälften 12 aus einer Winkelstellung in eine Parallelstellung zueinander verschwenkt werden können. In dieser Lage sind sie arretiert, wenn der so gebildete Flansch 11 an eine Montagefläche, beispielsweise eine Wandung eines Gehäuses angelegt ist. Es ist dann kein Freiheitsgrad für eine Bewegung der Flanschhälften 12 relativ zueinander mehr gegeben. Es wird damit eine sichere und einfach zu handhabende Verbindung der Teile ermöglicht.

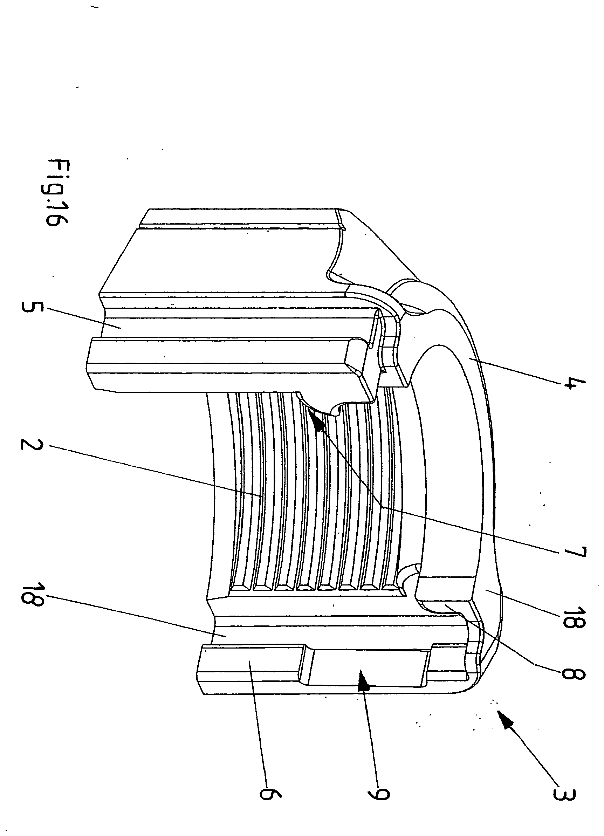

Eine weitere Besonderheit ist in der Figur 16 gezeigt. Hierbei ist die Axialleiste 6, die unter Bildung einer Abstandsnut 18 sich in Umfangsrichtung an den Gewindebereich der Halbschale 3 anschließt, an ihrem dem Kragen 4 zugewandten Endbereich von einer Deckwand 18 überdeckt, wobei diese Deckwand 18 in Umfangsrichtung an den Kragen 4 anschließt. Beim Zusammenbau der für die Druckschraube 1 notwendigen beiden Halbschalen 3 dient diese Deckwand 18 dazu, den Eingriffsspalt zwischen Deckleiste 6 und Axialnut 5 zu überdecken und gegen Blicke abzuschirmen. Zudem wird der Anschlussbereich der Axialleiste 6 an den Körper der Halbschale hierdurch versteift.

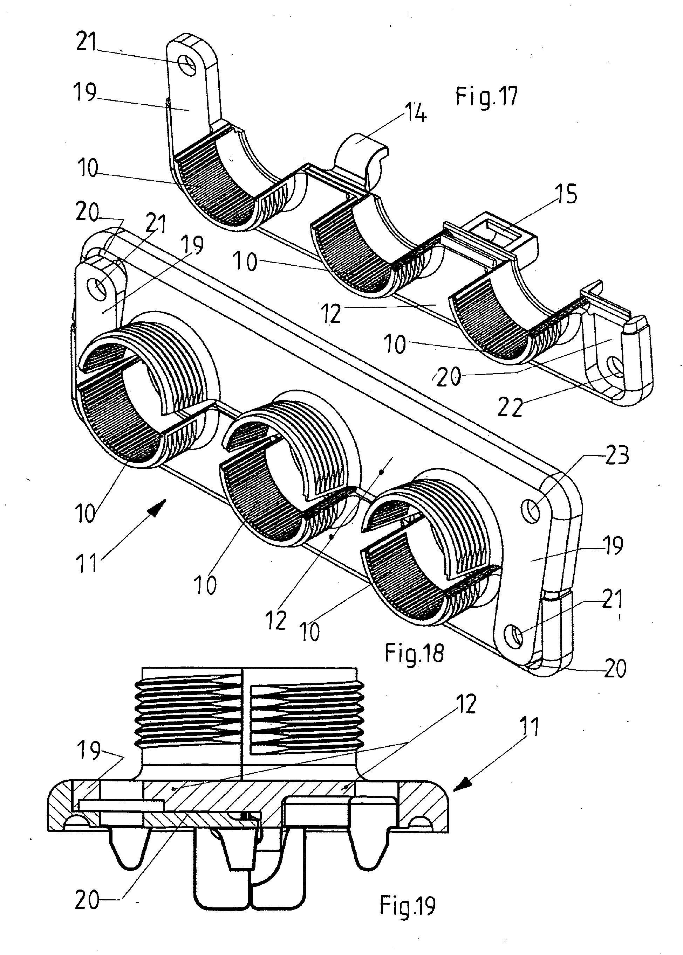

In Figur 17 bis 19 ist eine weitere bevorzugte Ausbildung des Flansches dargestellt. An jeder Hälfte 12 eines Flansches 11 ist an einem Endbereich des Flansches eine von der einen Hälfte 12 des Flansches 11 zu der anderen Hälfte 12 des Flansches 11 vorragende Lasche 19 angeformt, die einen Hebel bildet. Des Weiteren ist eine zu dieser formgleiche Laschenaufnahme 20 in Form einer Tasche am anderen Endbereich der jeweiligen Hälfte 12 ausgebildet. Wie in Figur 18 gut ersichtlich, ist in Montagesolllage jeweils eine Lasche 19 der einen Hälfte 12 in die dazu passende Laschenaufnahme 20 der anderen Hälfte 12 eingelegt. Zusätzlich weisen die Laschen 19 und die Laschenaufnahmen 20 jeweils Durchgangslochungen 21, 22 auf, die in Montagesolllage der Hälften 12 koaxial zueinander ausgerichtet sind und zum Durchstecken eines Befestigungsmittels, insbesondere jeweils einer Schraube dienen. Mittels dieser Schrauben kann der gesamte Flansch 11 an einer Gehäusewandung oder dergleichen befestigt werden, wobei zudem die Hälften 12 des Flansches 11 zueinander angezogen werden, sodass eine in der Trennfuge vorgesehene Dichtung zunehmend vorgepresst und auf Druck belastet wird, sodass eine gute Abdichtung der Hälften zueinander erreicht ist. Zudem ist noch jeweils in dem den Laschen 19 entgegengesetzten Bereich eine weitere Lochung 23 für Befestigungsmittel vorgesehen, sodass der Flansch insgesamt mittels 4 Schrauben an der entsprechenden Befestigungsebene befestigt werden kann.

## Patentansprüche

1. Vorrichtung zur Verlegung von Rohren, Leitungen und dergleichen Langformteilen durch Gerätewandungen und dergleichen Bauteile, bestehend aus mindestens einem Durchführungsnippel (10) mit Außengewinde (13 und mindestens einer Druckschraube (1) mit Innengewinde (2), die auf den Durchführungsnippel (10) aufschraubbar ist und die aus zwei Halbschalen (3) mit in Längsrichtung des Langformteiles verlaufenden Trennstellen besteht, die an den jeweils gegenüberliegenden Trennstellen der Halbschalen (3) der Druckschraube (1) ineinander greifende Führungs- und Positioniermittel aufweist, mittels derer die Halbschalen (3) in der Zusammenbaulage zueinander gehalten sind, wobei an der Druckschraube (1) ein nach radial innen gerichteter Kragen (4) als Druckfläche für einen Dichteinsatz ausgebildet ist, wobei die beiden Halbschalen (3) identische Form aufweisen, dass jede Halbschale (3) am Außenmantel an einer ersten Trennstelle der beiden Trennstellen eine nach radial außen offene Axialnut (5) und am Innenmantel an einer zweiten Trennstelle der beiden Trennstellen eine nach radial innen ragende Axialleiste (6) aufweist, **dadurch gekennzeichnet, dass** ferner am die Druckfläche bildenden Kragen (4) Verriegelungskonturen ausgebildet sind, nämlich an der ersten Trennstelle der Halbschale (3) ein Riegeleingriff (7) und an der zweiten Trennstelle ein Riegelvorsprung (8), wobei Riegeleingriff (7) und Riegelvorsprung (8) derart ausgerichtet und angeordnet sind, dass die Halbschalen (3) quer zur Schnittebene der Halbschalen (3) und quer zur Mittellängsachse zueinander verdreht aneinander anlegbar sind, und durch das Eingreifen der Riegelvorsprünge (8) in die Riegeleingriffe (7) verriegelt sind, wenn die Halbschalen (3) aus der verdrehten Lage in die Lage gebracht sind, in der ihre Mittellängsachsen koaxial gerichtet verlaufen.

2. Vorrichtung nach Anspruch 1, **dadurch gekennzeichnet, dass** das Innengewinde (2) der durch die beiden Halbschalen (3) gebildeten Druckschraube (1) sowie das Außengewinde (13) am Durchführungsnippel (10) zweigängig ist.

3. Vorrichtung nach Anspruch 1 oder 2, **dadurch gekennzeichnet, dass** die an der Halbschale (3) der Druckschraube (1) nach innen ragende Axialleiste (6) eine Ausnehmung (9) aufweist, die beim Zusammensetzen der Halbschalen (3) eine Einführhilfe für das stirnseitige Ende der Axialnut (5) bildet.

4. Vorrichtung nach Anspruch 1, wobei mehrere Durchführungsnippel (10) an einem plattenartigen geteilten Flansch (11) ausgebildet sind, **dadurch gekennzeichnet, dass** der Flansch (11) aus zwei, den oder die Durchführungsnippel (10) mittig kreuzenden Hälften (12) besteht, die mittels angeformter Verbindungsmittel miteinander verbindbar sind, dass die Hälften (12) identische Form und Ausgestaltung haben und in zusammengesetzter Lage ein zweigängiges Außengewinde (13) im Bereich jedes Durchführungsnippels (10) aufweisen.

5. Vorrichtung nach Anspruch 4, **dadurch gekennzeichnet, dass** an den Hälften (12) des Flansches (11) in der Zusammenbaulage ineinandergreifende Vorsprünge (14) und Ausnehmungen (15) ausgebildet sind.

6. Vorrichtung nach Anspruch 4 oder 5, **dadurch gekennzeichnet, dass** an jeder Flanschhälfte (12) eine elastische Dichtung angeordnet ist, die einerseits die Abdichtung vom Flansch gegenüber einer Gerätewandung und andererseits zwischen den Flanschhälften (12) bildet.

7. Vorrichtung nach Anspruch 5, **dadurch gekennzeichnet, dass** die elastische Dichtung zusätzlich im Bereich der Vorsprünge (14) und Ausnehmungen (15) an den Flanschhälften (12) vorgesehen ist.

8. Vorrichtung nach Anspruch 4 bis 7, **dadurch gekennzeichnet, dass** jede Flanschhälfte (12) oder mindestens eine der beiden den Flansch (11) bildenden Flanschhälften (12) mehrere Dichtungselemente aufweist, die als L-förmige Dichtungsabschnitte ausgebildet sind, wobei jeweils ein Schenkel der L-Form an der Längsrandkante der Trennfuge der Flanschhälfte (12) und ein Schenkel der L-Form an der Trennfuge des geteilten Durchführungsnippels (10) anliegt.

9. Vorrichtung nach Anspruch 5, **dadurch gekennzeichnet, dass** die Vorsprünge (14) als Hakenelemente und die Ausnehmungen (15) als quer von der Flanschhälfte nach unten, entgegen den Durchführungsnippeln (10) fensterartige Ausschnitte ausgebildet sind, wobei die Hakenlemente, bei einem Winkel miteinander einschließender Zuordnung der Flanschhälften (12) in die Ausschnitte einhakbar sind und durch Drehung der Flanschhälften (12) um die Verhakungsbereiche in eine zueinander parallele Ausrichtung unlösbar verhakt sind.

10. Vorrichtung nach Anspruch 1 bis 9, **dadurch gekennzeichnet, dass** die Axialleiste (6) an ihrem dem Kragen (4) zugewandten Endbereich von einer Deckwand (18) überdeckt ist, die in Umfangsrichtung an den Kragen (4) anschließt.

11. Vorrichtung nach Anspruch 4 bis 9, **dadurch gekennzeichnet, dass** an jeder Hälfte (12) eines Flansches (11) mindestens eine von der einen Hälfte (12) des Flansches (11) zu der anderen Hälfte (12) des Flansches (11) vorragende Lasche (19) ausgebildet ist und eine zu dieser formgleiche Laschenaufnahme (20) ausgebildet ist, wobei in Montagesolllage jeweils die Lasche (19) der einen Hälfte (12) in die Laschenaufnahme (20) der anderen Hälfte (12) eingelegt ist.

12. Vorrichtung nach Anspruch 11, **dadurch gekennzeichnet, dass** die Laschen (19) und die Laschenaufnahmen (20) jeweils Lochungen (21, 22) aufweisen, die in Montagesolllage der Hälften (12) koaxial zueinander ausgerichtet sind und zum Durchstecken eines Befestigungsmittels dienen.

13. Vorrichtung nach Anspruch 12, **dadurch gekennzeichnet, dass** die Hälften (12) jeweils in den Laschen (19)entgegengesetzten Bereichen weitere Lochungen (23) für Befestigungsmittel aufweisen.

## Claims

1. Apparatus for the laying of tubes, pipes and other long moulded parts through device walls and similar components, comprising at least one bushing nipple (10) having an external thread (13) and at least one pressure screw (1) having an internal thread (2), which can be screwed onto the bushing nipple (10) and which consists of two half shells (3) having separating points running in the longitudinal direction of the long moulded part, and which has engaging guidance and positioning means at each of the facing separating points of the half shells (3) of the pressure screw (1) for holding together the half shells (3) in the assembled state, wherein at the pressure screw (1) a collar (4) directed radially inwards is formed as pressure surface for a sealing insert, wherein the two half shells (3) have identical form, in the way that each half shell (3) has a radial outwardly open axial groove (5) at its outer casing at one first separating point of the two separating points, and a radially inwards directed axial bar (6) at its inner casing at a second separating point of the two separating points, **characterized in that** further, latching contours are formed at the collar (4) forming the pressure surface, namely a latch engagement (7) at the first separating point of the half shell (3) and a latch protrusion (8) at the second separating point, wherein the latch engagement (7) and latch protrusion (8) are aligned and arranged in a way that the half shells (3) can be aligned to one another in a twisted manner transversely to the section plane of the half shells (3) and transversely to the central longitudinal axis, and being locked by engaging of the latch protrusions (8) into the latch engagements (7), when the half shells (3) are put from the twisted position into that position in which their central longitudinal axes are running in coaxial direction.

2. Apparatus according to claim 1, **characterized in that** the internal thread (2) of the pressure screw (1) formed by the two half shells (3) as well as the external thread (13) at said bushing nipple (10) are embodied double-threaded.

3. Apparatus according to claim 1 or 2, **characterized in that** the axial bar (6) extending inwards at the half shell (3) of the pressure screw (1) has a recess (9), forming an insertion aid for the front end of the axial groove (5) upon assembling the half shells (3).

4. Apparatus according to claim 1, wherein multiple bushing nipples (10) are arranged at a plate-like divided flange (11), **characterized in that** the flange (11) consists of two halves (12), centrally crossing the bushing nipple or nipples (10), the halves (12) being connectable with one another by moulded connecting means, in a way that the halves (12) have identical form and design and have in assembled state a double-threaded external thread (13) in the area of each bushing nipple (10).

5. Apparatus according to claim 4, **characterized in that** in the assembled state, engaging protrusions (14) and recesses (15) are formed at the halves (12) of the flange (11).

6. Apparatus according to claim 4 or 5, **characterized in that** an elastic seal is arranged at each flange half (12), which forms the sealing on the one hand of the flange facing a device wall and on the other hand between the flange halves (12).

7. Apparatus according to claim 5, **characterized in that** the elastic seal is additionally provided in the area of the protrusions (14) and recesses (15) at the flange halves (12).

8. Apparatus according to claims 4 to 7, **characterized in that** each flange half (12) or at least one of the two flange halves (12) forming the flange (11) has multiple seal elements being formed as L-shaped sealing sections, wherein in each case one leg of the L-form abuts the longitudinal edge of the parting line of the flange half (12) and one leg of the L-form abuts the parting line of the divided bushing nipple (10).

9. Apparatus according to claim 5, **characterized in that** the protrusions (14) are designed as hook elements and the recesses (15) are designed as window-like sections arranged transversely from the flange half to the bottom, against the bushing nipples (10), wherein the hook elements can be hooked into the sections at an angle in which the flange halves (12) are arranged to one another, and are non-detachably interlocked by turning the flange halves (12) around the hooking areas into a position parallel to one another.

10. Apparatus according to claims 1 to 9, **characterized in that** the axial bar (6) is covered by a cover wall (18) at its end area facing the collar (4), the cover wall (18) joining the collar (4) in circumferential direction.

11. Apparatus according to claims 4 to 9, **characterized in that** at each half (12) of a flange (11) at least one lug (19) protruding from one of the halves (12) of the flange (11) to the other half (12) of the flange (11) is formed and a conforming lug receptacle (20) is formed, wherein in the desired assembly position, each lug (19) of the one half (12) is inserted into the lug receptacle (20) of the other half (12).

12. Apparatus according to claim 11, **characterized in that** each of the lugs (19) and lug receptacles (20) have holes (21, 22) being arranged coaxially to one another in the desired assembly position of the halves (12), and serving for inserting a latching means.

13. Apparatus according to claim 12, **characterized in that** each of the halves (12) has further holes (23) for latching means in the areas facing the lugs (19).

## Revendications

1. Dispositif permettant de poser des tubes, des conduites et pièces longilignes similaires à travers des parois d'appareils et composants similaires, constitué d'au moins un raccord traversant (10) pourvu d'un filetage extérieur (13), et d'au moins une vis de pression (1)^{(*)} munie d'un filetage intérieur (2) qui peut être vissée sur le raccord traversant (10) et qui est composée de deux demi-coques (3) avec des points de séparation dans le sens longitudinal de la pièce longiligne qui comprend au niveau des points de séparation respectivement opposés des demi-coques (3) de la vis de pression (1), des moyens de positionnement et de guidage s'imbriquant, à l'aide desquels les demi-coques (3) sont maintenues ensemble dans la position de montage, étant formée, au niveau de la vis de pression (1), une collerette (4) orientée radialement vers l'intérieur servant de surface de pression pour un joint d'étanchéité, les deux demi-coques (3) étant de forme identique, chaque demi-coque (3) comprenant, au niveau de l'enveloppe extérieure, au niveau d'un premier point de séparation des deux points de séparation, une rainure axiale (5) ouverte radialement vers l'extérieur et au niveau de l'enveloppe intérieure, au niveau d'un deuxième point de séparation des deux points de séparation, une bande axiale (6) dépassant radialement vers l'intérieur, **caractérisé en ce qu'**en outre, au niveau de la collerette (4) formant la surface de pression, sont réalisés des contours de verrouillage, à savoir, au niveau du premier point de séparation de la demi-coque (3), un organe de verrouillage (7) et au niveau du deuxième point de séparation, une saillie de verrouillage (8), l'organe de verrouillage (7) et la saillie de verrouillage (8) étant orientés et disposés de telle sorte que les demi-coques (3) peuvent être posées ensemble tournées l'une par rapport à l'autre, transversalement par rapport au plan de coupe des demi-coques (3) et transversalement par rapport à l'axe longitudinal central, et sont verrouillées par l'engagement des saillies de verrouillage (8) dans les organes de verrouillage (7) lorsque les demi-coques (3) sont amenées à partir de la position tournée dans la position dans laquelle leurs axes longitudinaux centraux sont coaxiaux.

2. Dispositif selon la revendication 1, **caractérisé en ce que** le filetage intérieur (2) de la vis de pression (1) formée par les deux demi-coques (3), ainsi que le filetage extérieur (13) sont réalisés à deux pas au niveau du raccord traversant (10).

3. Dispositif selon la revendication 1 ou 2, **caractérisé en ce que** la bande axiale (6) dépassant vers l'intérieur au niveau de la demi-coque (3) de la vis de pression (1), comporte un évidement (9) qui forme, lors de l'assemblage des demi-coques (3), un auxiliaire d'introduction pour l'extrémité côté face de la rainure axiale (5).

4. Dispositif selon la revendication 1, plusieurs raccords traversants (10) étant réalisés au niveau d'une bride (11) partagée, de type plaque, **caractérisé en ce que** la bride (11) est composée de deux moitiés (12) croisant au milieu le et les raccord(s) traversant(s) (10) qui peuvent être reliées ensemble à l'aide de moyens de liaison formés, **en ce que** les moitiés (12) possèdent une forme et une conception identiques et comportent à l'état assemblé un filetage extérieur (13) à deux pas dans la zone de chaque raccord traversant (10).

5. Dispositif selon la revendication 4, **caractérisé en ce qu'**au niveau des moitiés (12) de la bride (11), sont réalisés, à l'état d'assemblage, des saillies (14) et des évidements (15) qui s'imbriquent.

6. Dispositif selon la revendication 4 ou 5, **caractérisé en ce qu'**au niveau de chaque moitié de bride (12), il est disposé une étanchéité élastique qui forme d'une part, l'étanchéité de la bride envers une paroi d'appareil et, d'autre part, entre les moitiés de bride (12).

7. Dispositif selon la revendication 5, **caractérisé en ce que** l'étanchéité élastique est prévue, en plus, dans la zone des saillies (14) et évidements (15) au niveau des moitiés de bride (12).

8. Dispositif selon la revendication 4 à 7, **caractérisé en ce que** chaque moitié de bride (12) ou au moins une des deux moitiés de bride (12) formant la bride (11) comporte plusieurs éléments d'étanchéité qui sont réalisés en tant que section d'étanchéité en forme de L, à chaque fois, une branche de la forme en L étant au niveau de l'arête de bordure longitudinale du joint de séparation de la moitié de bride (12), et, une branche de la forme de L au niveau du joint de séparation du raccord traversant (10) partagé.

9. Dispositif selon la revendication 5, **caractérisé en ce que** les saillies (14) sont réalisées en tant qu'éléments crochets et les évidements (15), en tant que découpes en forme de fenêtre, opposées aux raccords traversants (10), transversales aux moitiés de bride vers le bas, les éléments crochets pouvant être accrochés dans les découpes, dans un angle, en association, conjointement encapsulante, des moitiés de bride (12) et pouvant être crochetés de manière inamovible en tournant les moitiés de bride (12) autour des zones de crochetage dans une orientation parallèle les unes aux autres.

10. Dispositif selon la revendication 1 à 9, **caractérisé en ce que** la bande axiale (6) est recouverte au niveau de son extrémité orientée vers la collerette (4) par une paroi de recouvrement (18) qui relie dans la direction de la circonférence au niveau de la collerette (4).

11. Dispositif selon la revendication 4 à 9, **caractérisé en ce qu'**au niveau de chaque moitié (12) d'une bride (11), est réalisée au moins une patte (19) dépassant d'une des moitiés (12) de la bride (11) par rapport à l'autre moitié (12) de la bride (11) et qu'un logement de patte (20) de forme identique à celle-ci est réalisé, à l'état de théorique de montage, la patte (19) d'une des moitiés (12) étant respectivement disposée dans le logement de patte (20) de l'autre moitié (12).

12. Dispositif selon la revendication 11, **caractérisé en ce que** les pattes (19) et les logements de patte (20) comportent respectivement des trous (21, 22), qui, à l'état théorique de montage des moitiés (12), sont orientés coaxialement les uns aux autres et servent pour insérer un moyen de fixation.

13. Dispositif selon la revendication 12, **caractérisé en ce que** les moitiés (12) comportent respectivement dans des zones opposées aux pattes (19) d'autres trous (23) pour des moyens de fixation.
